Europäisches Patentamt

European Patent Office

Office européen des brevets

(11) Veröffentlichungsnummer: **0 526 769 B1**

(12) **EUROPÄISCHE PATENTSCHRIFT**

(45) Veröffentlichungstag der Patentschrift: **28.12.94**

(51) Int. Cl.⁵: **C03C 8/06**, C03C 8/08

(21) Anmeldenummer: **92111878.2**

(22) Anmeldetag: **13.07.92**

(54) **Getrübtes Email für Direkt-emaillierungen auf ungebeiztem Stahlblech.**

(30) Priorität: **26.07.91 DE 4124801**

(43) Veröffentlichungstag der Anmeldung:
**10.02.93 Patentblatt 93/06**

(45) Bekanntmachung des Hinweises auf die
Patenterteilung:
**28.12.94 Patentblatt 94/52**

(84) Benannte Vertragsstaaten:
**DE ES FR GB IT NL**

(56) Entgegenhaltungen:
**EP-A- 0 425 927**
**FR-A- 2 495 190**
**US-A- 2 396 856**

**DATABASE WPIL Section Ch, Week 8816,**
**Derwent Publications Ltd., London, GB;Class**
**L, AN 88-106079 and DD A 251743**

**CHEMICAL ABSTRACTS, vol. 110, no. 10, 15.**
**Mai 1989, Columbus, Ohio, US;abstract no.**
**178391f, Seite 329**

**DATABASE WPIL Section Ch, Week 8322,**
**Derwent Publications Ltd., London, GB;Class**
**L, AN 83-53648K**

(73) Patentinhaber: **BAYER AG**

**D-51368 Leverkusen (DE)**

(72) Erfinder: **Podestá Wolfgang, Dr.**
**Lijsterdreef 20**
**B-8490 Varsenare (BE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft getrübte, beim Einbrand rekristallisierende Emailfritten zur Realisierung heller Farben für die Einschicht(direkt)-emaillierung auf ungebeiztem Stahlblech.

Direktemails für die Einschichtemaillierung auf nur entfettetem bzw. entfettetem und schwach gebeiztem (nicht vernickeltem) Stahlblech haben in der Regel 2 Aufgaben zu erfüllen.

Einerseits müssen sie innerhalb eines Brennintervalls von zumeist 2 - 8 Minuten eine fest haftende Verbindung zwischen Stahl und Email herbeiführen, andererseits müssen sie die gewünschte Farbe, Helligkeit, Oberflächentextur sowie chemische Beständigkeit gegen Wasser, Säuren und Basen mitbringen.

Weiterhin kann das Eigenschaftsprofil der Emaillierung durch Zusatz von Inertstoffen, Farbkörpern, Mattierungs- bzw. Trübungsmitteln und anderen Mühlenzusätzen in begrenztem Maße beeinflußt werden.

Zwecks Erzielung einer guten Emailhaftung erweist es sich als notwendig, Übergangsmetalloxide wie z.B. $CoO$, $NiO$, $Fe_2O_3$, $MnO$ in Mengenanteilen von zumeist 1 bis 5 Gew.-% (Summe) in das Email einzuschmelzen. Durch die intensiv dunkle Farbe dieser Haftoxide erhalten die mit entsprechenden Emails hergestellten Emaillierungen ebenfalls eine zumeist dunkle Farbe (dunkelblau, dunkelbraun, schwarz, dunkelgrün etc.).

Hellere Einschichtemaillierungen können durch Einschmelzen größerer Mengenanteile an Antimonoxid in Emails ohne färbende Bestandteile erhalten werden; dabei fungiert das als Haftmittel eingesetzte Antimonoxid zugleich als Trübungsmittel. Emails auf Antimonoxid-Basis genügen jedoch den heutigen Anforderungen an Stahlemails (Säurebeständigkeit, Emailhaftung auf entkohltem Stahl) zumeist nicht mehr.

Ein anderer Weg zur Realisierung heller Einschichtemaillierungen besteht in der Verwendung von vernickeltem Blech, auf das getrübte Emails ohne intensiv färbende Bestandteile (Haftoxide) haftfest aufgebracht werden können. Diese, auch als Direktweißemaillierung bekannte, und in großem Umfang praktizierte Alternative hat jedoch den Nachteil einer sehr aufwendigen Vorbehandlung (Beize, Vernickelung) und der damit verbundenen Kosten bzw. ökologischen Probleme.

Eine Verwendung der für die Direktweißemaillierung eingesetzten Bortitanweißemails mit Rekristallisationstrübung (Ausscheidung von $TiO_2$-Kristallen aus der Glasmatrix während des Einbrandes) als Direktemail auf ungebeiztem Blech ist selbst bei Einführung von haftungsfördernden Übergangsmetalloxiden ($CoO$, $NiO$) nicht möglich, da das in hohen Mengenanteilen vorliegende $TiO_2$ die Blechoberfläche durch Eisentitanatbildung passiviert, und damit der Haftreaktion mit den im Email enthaltenen Haftoxiden weitgehend entzieht (vergl. A. Dietzel: Emaillierung, Springer-Verlag, Berlin, 1981, S. 126 - 128).

Direktemails auf Basis anderer trübender Bestandteile erweisen sich zumeist als nicht oder nur wenig geeignet, da entweder die Brechzahl der sich ausscheidenden Kristallphase niedrig ist ($CaF_2$) oder aber eine (teilweise) Auflösung der Kristallphase in der Glasmatrix erfolgt ($ZrSiO_4$, $ZrO_2$).

Emails auf Basis von $CeO_2$ als Trübungsmittel wurden bislang ausschließlich als Deckemail oder als Direktweißemail auf vernickeltem Stahl verwendet (vgl. A.I. Nedelkovic M.R.L. Cook, Mitteilungen des Vereins Deutscher Emailfachleute 20, 1972, S. 121 ff.).

Eine in US-Patent 4975391 beschriebene Emailzusammensetzung für die Direktemaillierung beinhaltet zwar auch $CeO_2$ als Bestandteil, jedoch bezieht sich die Anwendung der beschriebenen Emails mit vergleichsweise hohem Gehalt an $SiO_2$, $TiO_2$ und $ZrO_2$ speziell auf die Emaillierung von Reaktionskesseln für Chemieapparate und nicht auf die Erzielung heller rekristallisierender Emaillierungen.

Zudem sind die angegebenen Zusammensetzungen sehr pauschal, so daß nicht ersichtlich ist, wie hiermit Säurebeständigkeit + Emailhaftung + Farbe/Helligkeit in der gewünschten Weise kombiniert sind.

In der Praxis werden für die Einschichtemaillierung hellerer Farben auf ungebeiztem Stahl zumeist spezielle Emails mit sorgfältig aufeinander abgestimmten (färbenden) Haftoxiden verwendet, wobei die Helligkeit der Emaillierung durch Zugabe von Trübungsmitteln zur Mühle (z.B. $TiO_2$, $ZrO_2$, $Sb_2O_3$, $SnO_2$) gezielt verändert wird.

Dieses Verfahren führt aber einerseits zu Verschlechterungen verschiedener Emaileigenschaften (Emailhaftung, Glanz, Säurebeständigkeit usw.), andererseits ist die erzielbare Trübung aufgrund teilweiser Auflösung der Trübungsmittel beim Emaileinbrand nicht optimal. Zudem kann es wegen der unterschiedlichen Dichte von Trübungsmittel und Emailfritte zu Entmischungen während der Verarbeitung und damit zu Farbverschiebungen kommen.

Die zu lösende Aufgabe bestand also darin, eine Emailzusammensetzung zu entwickeln, die einerseits die für eine gute Haftungsentwicklung benötigten (gefärbten) Haftoxide enthält und andererseits durch Ausscheidung einer Kristallphase hoher Brechzahl (starke Trübung) während des Emaileinbrandes die vergleichsweise dunkle Farbe der Glasmatrix überdeckt, ohne daß dabei die gewünschten Emaileigenschaften (Haftung, chemische Beständigkeit, glatte Oberfläche) negativ beeinflußt werden.

Durch Bereitstellung der erfindungsgemäßen Emailfritten konnte diese Aufgabe gelöst werden.

2

Überraschenderweise wurde gefunden, daß Direktemailfritten, die im wesentlichen aus einer Glasmatrix aus 40 - 60 Gew.-% ($SiO_2$ + $ZrO_2$) mit einem $SiO_2$/$ZrO_2$-Molverhältnis >10, 10 - 20 Gew.-% Alkalioxiden mit einem $Na_2O$/($Li_2O$ + $K_2O$)-Molverhältnis >0,8, 8 - 18 Gew.-% $B_2O_3$, 0 - 15 Gew.-% CaO + BaO + MgO + ZnO, 0 - 8 Gew.-% $TiO_2$, 0 - 4 Gew.-% $P_2O_5$, 0 - 4 Gew.-% $Al_2O_3$, 0,3 - 5 Gew.-% Fluor in Form von Fluoriden, 1,5 - 5 Gew.-% haftungsfördernden Bestandteilen aus der Gruppe CoO, NiO, CuO, wobei CuO in einem Mengenanteil von 0,2 - 2,5 Gew.-% und CoO bzw. NiO jeweils in einem Mengenanteil von 0,2 - 3,5 Gew..-% enthalten sein müssen, sowie aus 2,5 - 9 Gew.-% $CeO_2$ bestehen, während des Emaileinbrandes durch Ausscheidung von $CeO_2$-Kristallen zu einer deutlichen Trübung der Emaillierung ohne Verluste anderer gewünschter Emaileigenschaften, wie z.B. Emailhaftung oder Säurebeständigkeit führen.

Die erfindungsgemäßen Emails können zusätzlich MnO, $Fe_2O_3$ oder andere färbende Bestandteile in einem Mengenanteil von bis zu 6 Gew.-% enthalten, sowie 0 - 2 Gew.-% $Sb_2O_3$.Weitere vorteilhafte Ausführungsformen sind in den Anspüchen 2 bis 4 beschrieben.

Überraschenderweise zeigten elektronenmikroskopische Aufnahmen, daß die beim Emaileinbrand gebildeten $CeO_2$-Kristallite in einer für die Lichtbrechung optimalen Teilchengröße von 0,1 - 1$\mu$m vorliegen (Bereich der halben Lichtwellenlänge), wobei der Mengenanteil des ausgeschiedenen $CeO_2$ bezüglich des eingesetzten $CeO_2$ bei emailüblichen Einbrenntemperaturen von 800 - 840°C deutlich mehr als 50 % beträgt. Damit verläuft die $CeO_2$-Rekristallisation in den erfindungsgemäßen Emailfritten effektiver als die $TiO_2$-Ausscheidung in Bortitanweißemails.

Weiterhin zeigte sich überraschenderweise, daß das als Rohstoff hochschmelzende $CeO_2$ (Fp. = 2.870°C) weder die Viskosität noch die Erweichungstemperatur der Fritte nennenswert erhöht. Dies ist besonders wichtig für die Anwendung von Direktemails auf ungebeiztem Stahl, da nur Emails mit vergleichsweise niedrigem Erweichungspunkt (z.B. <535°C) eine frühzeitige Haftreaktion zwischen Email und Stahl sowie ein ausreichendes Glattfließen des Emails während eines Einbrennintervalls von 2 - 8 Minuten gewährleisten.

Die erfindungsgemäßen Emails eignen sich für den Schlickerauftrag durch Fluten, Tauchen oder Spritzen, können aber auch durch elektrophoretischen Tauchauftrag auf das zu emaillierende Blech aufgebracht werden. Voraussetzung für eine gute Abdeckung der beim Emaileinbrand an der Phasengrenze Stahl/Email gebildeten eisenreichen Zwischenschicht ist in jedem Fall eine Mindestschichtstärke von 80 - 90 $\mu$m Email.

Die erfindungsgemäßen Emails werden aus handelsüblichen Emailrohstoffen wie Borax ($Na_2B_4O_7$ . 5 $H_2O$), Quarzmehl, Natriumpolyphosphat, Feldspat, Zirkonsand, Flußspat, Alkali- und Erdalkalicarbonaten, $CeO_2$ einer Reinheit von mindestens 92 % sowie den erforderlichen (färbenden) Übergangsmetalloxiden bei Temperaturen von 1.100 - 1.260°C geschmolzen und über wassergekühlte Stahlwalzen abgeschreckt. Die so entstandenen Flakes werden unter Verwendung verschiedener Mühlenzusätze naß vermahlen und als wäßrige Suspension in Schlickerform durch Tauchen oder Spritzen oder elektrophoretischen Tauchauftrag auf Prüfbleche von 0.5 - 3 mm Stärke aufgebracht und in einem Boxofen oder auch in einem Temperaturgradientenofen in einem Temperaturbereich zwischen 780 und 860°C eingebrannt.

Die Schichtstärke der Direktemaillierungen betrugen zwischen 0.05 und 0.25 mm. Die Prüfung der Emailhaftung erfolgte mit dem Kugelfallgerät gemäß DEZ-Merkblatt F 6.2 unter Verformung der emaillierten Bleche und visueller Beurteilung des Haftungsbildes. Die Beurteilung der Beständigkeit gegen die kalte Zitronensäure bzw. Wasser/Dampf erfolgte an emaillierten Platten von 100 x 100 x 1 mm gemäß DIN-ISO 2722 bzw. DIN-ISO 2744. Die Trübung (Helligkeit) wurde visuell bzw. farbmetrisch nach dem CIE-LAB System beurteilt.

Der Gegenstand der vorliegenden Erfindung soll anhand der folgenden Beispiele noch naher erläutert werden.

Beispiel 1

Zum Zwecke der Überprüfung der helligkeitssteigernden Wirkung von $CeO_2$ in Emails wurden übliche Direktemails für nur entfettetes Blech so modifiziert, daß im wesentlichen ein Teil des als Hauptkomponente enthaltenen $SiO_2$ durch $CeO_2$ ersetzt wurde.

Am Beispiel der Fritten 1 und 4, deren Zusammensetzung Tabelle I zu entnehmen ist, soll der Einfluß des $CeO_2$ im Email auf verschiedene Emaileigenschaften verdeutlicht werden (Fritte 1 enthält 6,7 % $CeO_2$).

Die Präparation der Emaillierungen erfolgte durch Naßvermahlung der Fritten mit 10 % Quarzmehl, 5 % Blauton, 0,25 % Borax, 0,1 % Natriumnitrit sowie 50 % Wasser (bezogen auf 100 Teile Fritte), anschließenden Auftrag des erhaltenen Schlickers durch Spritzen oder Tauchen auf Bleche von 100 x 100 x 1 mm, Trocknung des dabei entstandenen Emailbisquits sowie Einbrand während 4 Minuten bei 820°C, wobei die Emailschichtdicke nach dem Einbrand zwischen 0,15 und 0,20 mm betrug.

Wie aus Tabelle I zu entnehmen ist, unterscheiden sich das $CeO_2$-haltige Email 1 und das vergleichbare $CeO_2$-freie Email 4 nur sehr geringfügig bezüglich der Erweichungstemperatur. Da die beiden Emailfritten die gleichen Mengengehalte an Haftoxiden (CoO, NiO, CuO) enthalten, überrascht es nicht, daß die Emailhaftung auf EX 4-Normalstahl sowie auf entkohltem ED 3-Stahl ebenfalls vergleichbar gut ausfällt. Der Einfluß von $CeO_2$ auf die Emailhaftung muß daher - falls überhaupt vorhanden - als sehr gering angesehen werden.

Tabelle I

| Zusammensetzung [Gew.-%] | Fritte | | | |
|---|---|---|---|---|
| | 1 | 2 | 3 | 4 |
| $SiO_2$ | 47,1 | 46,2 | 45,9 | 51,7 |
| $ZrO_2$ | - | - | 1,0 | 1,0 |
| $CeO_2$ | 6,7 | 4,0 | 7,9 | - |
| $TiO_2$ | 4,3 | 5,0 | 2,4 | 4,3 |
| $P_2O_5$ | - | 1,0 | 1,3 | 0,9 |
| $B_2O_3$ | 15,7 | 16,8 | 12,1 | 15,8 |
| $Al_2O_3$ | 0,9 | 0,8 | 1,1 | 0,8 |
| $Na_2O$ | 13,8 | 11,0 | 9,9 | 13,8 |
| $K_2O$ | 0,6 | 1,0 | - | 0,6 |
| $Li_2O$ | 2,0 | 3,3 | 3,8 | 2,1 |
| MgO | 0,1 | - | - | - |
| CaO | 0,7 | 2,6 | 4,2 | 0,7 |
| BaO | - | 2,3 | 2,7 | - |
| ZnO | - | 1,3 | - | - |
| MnO | 1,5 | 0,5 | 1,7 | 1,5 |
| $Fe_2O_3$ | 2,4 | - | 1,1 | 2,4 |
| CoO | 0,4 | 0,6 | 0,4 | 0,4 |
| NiO | 1,8 | 1,6 | 2,3 | 1,8 |
| CuO | 0,5 | 0,3 | 0,5 | 0,5 |
| $Sb_2O_3$ | - | 0,5 | - | - |
| F | 2,5 | 1,8 | 2,2 | 2,5 |
| Erweichungspunkt $T_E$ | 498°C | 505°C | 499°C | 499°C |
| Helligkeit L | 59,1 | 44,9 | 59,0 | 35,4 |
| Emailhaftung EK-4* | 2 | 1 | 1 | 2 |
| Emailhaftung ED-3* | 2 | 3 | 1 | 3 |
| Zitronensäurebeständigkeit nach DIN-ISO 2722 | B | AA | A | B |

*bezogen auf 820°C Einbrenntemperatur,
1 = sehr gut, 5 = keinerlei Haftung

Auch die Beständigkeit der beiden Emaillierungen 1 und 4 gegen kalte 10%ige Zitronensäure (siehe Tabelle I) bzw. 100°C heißem Wasser/Dampf ist vergleichbar.

Dagegen unterscheiden sich die Helligkeitswerte L der Emaillierungen 1 bzw. 4 sehr deutlich voneinander ($\Delta L = 24$), was auf die starke $CeO_2$-Kristallisation der Fritte 1 zurückzuführen ist.

Auf Gradientenstreifen von 60 x 450 x 1 mm wurden zusätzlich die Schichtstärken- bzw. die Einbrenntemperaturabhängigkeit der Helligkeit ermittelt. Es zeigte sich, daß die auf Basis der Emailrezeptur 1 erhaltene Emaillierung in einem Temperaturintervall von 780 - 845°C weitestgehend stabil bezüglich Helligkeit und Farbe ist. Variation der Schichtstärke von 0.12 - 0.20 mm führte ebenfalls zu keinen wesentlichen Helligkeitsunterschieden.

Beispiel 2

In diesem Beispiel soll der Einfluß eines - gegenüber Beispiel 1 - vergleichsweise geringen $CeO_2$-Zusatzes zu einer besonders säurebeständigen Emailfritte (Fritte 2) demonstriert werden.

Bei vergleichbarer Herstellung des Emails bzw. der Emaillierung ergibt sich im Fall eines Zusatzes von nur 4 Gew.-% $CeO_2$ zwar eine Helligkeitssteigerung von $\Delta L = +10$ gegenüber der $CeO_2$-freien Fritte 4, gegenüber Fritte 1 mit 6,7 Gew.-% $CeO_2$ fällt die Helligkeit aber deutlich um $\Delta L = -10$ ab. Bei weiterer Reduzierung des $CeO_2$-Gehaltes verringert sich der Helligkeitswert weiter, so daß der in Anspruch 1 der Erfindung angegebene Minimalgehalt von 2,5 Gew.-% $CeO_2$ die absolute Untergrenze darstellt. Um einen großen Helligkeitsunterschied gegenüber $CeO_2$-freien Direktemails zu erreichen, sind in der Regel zumindest 4,5 - 6,5 Gew.-% $CeO_2$ nötig, in Einzelfällen auch mehr.

Beispiel 3

Wie auch bei den Fritten aus den Beispielen 1 und 2 eignen sich $CeO_2$-haltige Emails für den elektrophoretischen Emailauftrag. Dies soll anhand der Fritte 3 aus Tabelle I näher erläutert werden.

Zunächst wurde hierfür Fritte 3, die analog den Emails 1 und 2 durch Erschmelzen der entsprechenden Rohstoffe in einem Tiegel von 700 ml Volumen während 35 Minuten bei 1.230°C und anschließendes Abschrecken in Wasser gehalten wurde, entsprechend dem u.a. Mühlenversatz mit Wasser und schlickstabilisierenden Zusätzen auf eine Mahlfeinheit von 8 auf dem Bayer-Prüfsieb (16.900 Maschen) vermahlen.

| | |
|---|---|
| Fritte | 100 Gew.-% |
| Quarzmehl | 8.8 Gew.-% |
| Blauton | 2.5 Gew.-% |
| Bentonit | 0.8 Gew.-% |
| Relatin | 0.1 Gew.-% |
| NaCl | 0.01 Gew.-% |
| Wasser | 55 Gew.-% |

Anschließend wurden pH und Viskosität des Schlickers durch Zufügen von Wasser, Natronlauge bzw. Natriumaluminat auf >10,5 bzw. 110 mPa.sec eingestellt. Bei einer Schlicker-Leitfähigkeit von ca. 3.000μS wurde damit eine gleichmäßige Beschichtung mit hohem Umgriff gewährleistet.

Die elektrophoretische Emailabscheidung auf entfetteten kohlenstoffarmen Emaillierblechen von 70 x 110 x 1 mm Abmessung erfolgte bei einer Stromstärke von 5 - 10 Ampere bzw. einer Stromspannung von ca. 50 Volt, so daß nach dem Einbrand eine Schichtstärke von 0.18 mm resultierte. Der Einbrand erfolgte bei 830 und 840°C in einem Boxofen während 3 - 4 Minuten.

Die so erhaltenen Emaillierungen zeigten eine sehr gute Emailhaftung, Beständigkeit gegen kalte Zitronensäure bzw. heißem Wasser/Dampf sowie eine gleichmäßige glatte, leicht zu reinigende Oberfläche. Die Helligkeit der Emaillierung entsprach derjenigen der mit Fritte 1 im Spritzauftrag erhaltenen Emaillierung und lag damit ebenfalls um $\Delta L = +24$ über der Fritte 4 hergestellten $CeO_2$-freien Emaillierung.

Die Hauptschwierigkeit bei der Entwicklung der Fritten 1 - 3 bestand darin, die durch $CeO_2$-Rekristallisation hervorgerufene Trübung und die Emailhaftung in optimaler Weise zu verknüpfen. Dabei erwies es sich als notwendig, den Gehalt an färbenden Haftoxiden (CoO, NiO, CuO) durch geeignete Ausmischung untereinander sowie mit nichtfärbenden haftungsfördernden Bestandteilen so niedrig wie möglich zu halten. Hierbei spielen insbesondere CuO und Fluor eine wesentliche Rolle, wie anhand von Beispiel 4 gezeigt werden soll.

Beispiel 4

Ausgehend von Email 5 (siehe Tabelle II), das 5.5 Gew.-% $CeO_2$, 0,5 % CuO und 1,7 % Fluor in Form von Fluoriden enthält, wurden je eine CuO- bzw. Fluor-freie Fritte (5 A, 5 B) erschmolzen und wie in Beispiel 1 beschrieben emailliert. Die Eigenschaften der entsprechenden Emaillierung sind in Tabelle II zusammengestellt.

Danach ist für jedermann ersichtlich, daß das Weglassen von nur 0,5 Gew.-% CuO in Fritte 5 A zu einer drastischen Verschlechterung der Emailhaftung führt, und zwar auf entkohltem (ED 3)-Stahl stärker als auf kohlenstoffhaltigem (EK 4)-Stahl. Die Beständigkeit gegen kalte Zitronensäure bleibt praktisch unbeeinflußt, die Helligkeit erhöht sich aufgrund des fehlenden CuO leicht um $\Delta L = +0,5$.

Andererseits führt die Verminderung des Fluorgehaltes auf 0 Gew.-% (Fritte 5 B) zwar zu einer leichten Verbesserung der Beständigkeit gegen kalte Zitronensäure (AA), aber zu einer fast ebenso starken Haftungsverminderung wie im Falle der CuO-Eliminierung. Zudem reduziert sich die Helligkeit bei der fluorfreien Variante gegenüber der fluorhaltigen Fritte um $\Delta L = -0,8$, was durch die keimbildende Wirkung des Fluors erklärt werden kann.

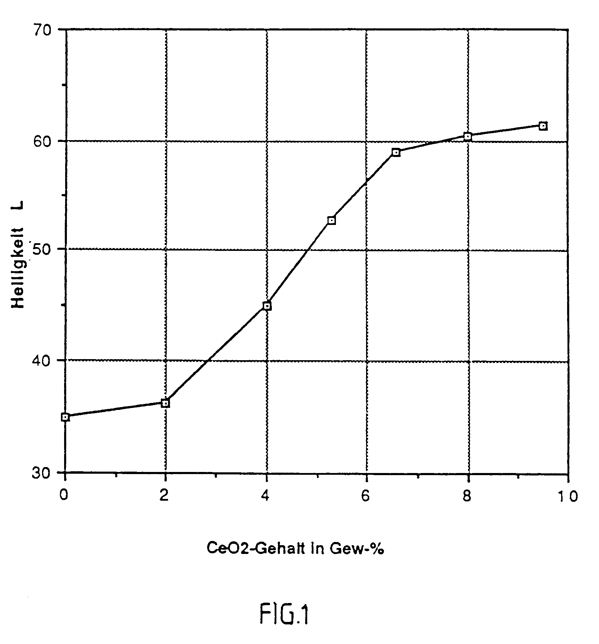

Insgesamt zeigen die Beispiele deutlich, daß der Grad der Helligkeit in erster Linie durch den $CeO_2$-Gehalt in der Fritte beeinflußt wird. Bei $CeO_2$-Gehalten oberhalb von 9 Gew.-% verändert sich die Helligkeit bei den erfindungsgemäßen Emailfritten (Direktemails für nur entfetteten Stahl) dagegen nur noch geringfügig. Fig. 1 zeigt die Abhängigkeit der Helligkeit emaillierter Bleche von $CeO_2$-Gehalt.

Tabelle II

| Zusammensetzung [Gew.-%] | Fritte | | |
|---|---|---|---|
| | 5 | 5A | 5B |
| $SiO_2$ | 50,4 | 50,7 | 50,4 |
| $CeO_2$ | 5,3 | 5,5 | 5,5 |
| $TiO_2$ | 3,5 | 3,5 | 3,5 |
| $B_2O_3$ | 12,5 | 12,6 | 12,5 |
| $Al_2O_3$ | 1,0 | 1,0 | 1,0 |
| $Na_2O$ | 10,4 | 10,5 | 10,4 |
| $P_2O_5$ | 0,4 | 0,4 | 0,4 |
| $Li_2O$ | 3,6 | 3,6 | 3,6 |
| $CaO$ | 4,3 | 4,3 | 4,3 |
| $BaO$ | 2,8 | 2,8 | 2,8 |
| $MnO$ | 1,9 | 1,9 | 1,9 |
| $Fe_2O_3$ | 1,0 | 1,0 | 1,0 |
| $CoO$ | 0,4 | 0,4 | 0,4 |
| $NiO$ | 2,0 | 2,0 | 2,0 |
| $CuO$ | 0,5 | - | 0,5 |
| F | 1,5 | 1,5 | - |
| Helligkeit L | 52,8 | 53,3 | 52,0 |
| Zitronensäurebeständigkeit (DIN-ISO 2722) | A | A | AA |
| Emailhaftung EK-4 | 1 | 3 | 3 |
| Emailhaftung ED-3 | 1 | 5 | 4 |

*bezogen auf 820 °C Einbrenntemperatur,
1 = sehr gut, 5 = keinerlei Haftung

Weiterhin zeigen die Beispiele, daß bei der Entwicklung $CeO_2$-haltiger Direktemails darauf zu achten ist, daß nicht mehr als unbedingt erforderlich an färbenden Bestandteilen, insbesondere CoO, zu verwenden ist, da die durch $CeO_2$ hervorgerufene Trübung ansonsten leicht wieder aufgehoben wird. Von daher ist es vorteilhaft, daß der Anteil an MnO, $Fe_2O_3$ sowie anderen färbenden Bestandteilen auf insgesamt 6 Gew.-% sowie den Anteil an Haftoxiden (CoO, NiO, CuO) auf insgesamt maximal 5, bevorzugt aber 3 Gew.-% begrenzt ist.

**Patentansprüche**
**Patentansprüche für folgende Vertragsstaaten : DE, FR, GB, IT, NL**

**1.** Emailfritte für die Direktemaillierung von emaillierfähigem, vorzugsweise niedriglegiertem strangvergossenem Stahl, dadurch gekennzeichnet, daß die Fritte aus folgenden glasbildenden Bestandteilen besteht:

40 - 60 Gew.-% $SiO_2$ + $ZrO_2$ mit einem $SiO_2/ZrO_2$ Molverhältnis > 10
10 - 20 Gew.-% Alkalioxid mit einem $Na_2O/(Li_2O + K_2O)$-Molverhältnis > 0,8
8 -18 Gew.-% $B_2O_3$
0 -15 Gew.-% CaO + BaO + MgO + ZnO
0 - 8 Gew.-% $TiO_2$
0 - 4 Gew.-% $P_2O_5$
0 - 4 Gew.-% $Al_2O_3$
0,3- 5 Gew.-% Fluor in Form von Fluoriden

0,2- 3,5 Gew.-% von NiO bzw. CoO

0 - 2 Gew.-% $Sb_2O_3$

0,2- 2,5 Gew.-% CuO,

wobei 1,5 - 5 Gew.-% haftungsfördernde Bestandteile aus der Gruppe CoO, NiO und CuO vorhanden sind, sowie zusätzlich MnO, $Fe_2O_3$ oder anderen färbenden Bestandteilen in Mengenanteilen von bis zu 6 Gew.-% und außerdem 2,5 - 9 Gew.-% $CeO_2$ enthält, welches durch Ausscheidung von $CeO_2$-Kristallen beim Einbrand zu einer deutlichen Trübung der Emaillierung ohne Verlust anderer gewünschter Emaileigenschaften, wie z.B. Säurebeständigkeit und Emailhaftung führt.

2. Fritte gemäß Anspruch 1, dadurch gekennzeichnet, daß der Gehalt an Fluor in Form von Fluoriden 0,5 - 4 Gew.-% beträgt.

3. Fritte gemäß Anspruch 1, dadurch gekennzeichnet, daß die gewünschte Beständigkeit gegen Wasser und verschiedene Mineralsäuren dadurch erzielt wird, daß der Anteil an $Li_2O$ 1,5 - 5,5 Gew.-% und der Summenanteil von $Li_2O$ + $TiO_2$ 3 - 11 Gew.-% der Frittenzusammensetzung ausmacht.

4. Fritte gemäß Anspruch 1, dadurch gekennzeichnet, daß das als Schmelzrohstoff eingesetzte $CeO_2$ eine Reinheit von mindestens 92 % aufweist, und nicht mit natürlichen Mineralien wie Bastnäsit, Monazit etc. verunreinigt ist.

5. Verwendung der Fritte gemäß Anspruch 1 bis 4 zur Direktemaillierung von Stahlblech, dadurch gekennzeichnet, daß die durch $CeO_2$-Ausscheidung während des Einbrandes hervorgerufene Trübung noch weiter verstärkt werden kann durch Verwendung trübender Mühlenzusätze, z.B. $ZrO_2$, $TiO_2$, $Sb_2O_3$, $CeO_2$.

6. Verwendung der Fritte gemäß Anspruch 1 bis 4 zur Herstellung von hellen, säurebeständigen, gut haftenden Beschichtungen auf ungebeizten oder nur schwach gebeizten Kochgeschirren, Backöfen incl. Zubehör, Architekturpaneelen, Wärmetauscherblechen und Sanitärgegenständen im 1 Schicht-1 Brand-Verfahren.

**Patentansprüche für folgenden Vertragsstaat : ES**

1. Verfahren zur Herstellung von Emailfritten für die Direktemaillierung von emaillierfähigen, vorzugsweise niedriglegiertem, strang-vergossenem Stahl, dadurch gekennzeichnet, daß die Fritten aus handelsüblichen Emailrohstoffen bei Temperaturen von 1100 - 1260°C geschmolzen, dann abgeschreckt und vermahlen werden, wobei die Rohstoffe in solchen Mengen eingesetzt werden, daß die Fritten aus folgenden glasbildenden Bestandteilen bestehen:

40 - 60 Gew.-% $SiO_2$ + $ZrO_2$ mit einem $SiO_2/ZrO_2$ Molverhältnis > 10

10 - 20 Gew.-% Alkalioxid mit einem $Na_2O/(Li_2O + K_2O)$-Molverhältnis > 0,8

8 - 18 Gew.-% $B_2O_3$

0 - 15 Gew.-% CaO + BaO + MgO + ZnO

0 - 8 Gew.-% $TiO_2$

0 - 4 Gew.-% $P_2O_5$

0 - 4 Gew.-% $Al_2O_3$

0,3 - 5 Gew.-% Fluor in Form von Fluoriden

0,2 - 3,5 Gew.-% von NiO bzw. CoO

0 - 2 Gew.-% $Sb_2O_3$

0,2 - 2,5 Gew.-% CuO,

wobei 1,5 - 5 Gew.-% haftungsfördernde Bestandteile aus der Gruppe CoO, NiO und CuO vorhanden sind, sowie zusätzlich MnO, $Fe_2O_3$ oder anderen färbenden Bestandteilen in Mengenanteilen von bis zu 6 Gew.-% und außerdem 2,5 - 9 Gew.-% $CeO_2$ enthält, welches durch Ausscheidung von $CeO_2$-Kristallen beim Einbrand zu einer deutlichen Trübung der Emaillierung ohne Verlust anderer gewünschter Emaileigenschaften, wie z.B. Säurebeständigkeit und Emailhaftung führt.

2. Verfahren gemäß Anspruch 1, dadurch gekennzeichnet, daß der Gehalt an Fluor in Form von Fluoriden 0,5 - 4 Gew.-% beträgt.

**3.** Verfahren gemäß Anspruch 1, dadurch gekennzeichnet, daS die gewünschte Beständigkeit gegen Wasser und verschiedene Mineralsäuren dadurch erzielt wird, daS der Anteil an $Li_2O$ 1,5 - 5,5 Gew.-% und der Summenanteil von $Li_2O$ + $TiO_2$ 3 - 11 Gew.-% der Frittenzusammensetzung ausmacht.

**4.** Verfahren gemäß Anspruch 1, dadurch gekennzeichnet, daß das als Schmelzrohstoff eingesetzte $CeO_2$ eine Reinheit von mindestens 92 % aufweist, und nicht mit natürlichen Mineralien wie Bastnäsit, Monazit etc. verunreinigt ist.

**5.** Verwendung der gemäß Anspruch 1 bis 4 hergestellten Fritten zur Direktemaillierung von Stahlblech, dadurch gekennzeichnet, daß die durch $CeO_2$-Ausscheidung während des Einbrandes hervorgerufene Trübung noch weiter verstärkt werden kann durch Verwendung trübender Mühlenzusätze, z.B. $ZrO_2$, $TiO_2$, $Sb_2O_3$, $CeO_2$.

**6.** Verwendung der gemäß Anspruch 1 bis 4 hergestellten Fritten zur Herstellung von hellen, säurebeständigen, gut haftenden Beschichtungen auf ungebeizten oder nur schwach gebeizten Kochgeschirren, Backöfen incl. Zubehör, Architekturpaneelen, Wärmetauscherblechen und Sanitärgegenständen im 1 Schicht-1 Brand-Verfahren.

**Claims**

**Claims for the following Contracting States : DE, FR, GB, IT, NL**

**1.** An enamel frit for the direct enamelling of enamellable, preferably low-alloyed extruded steel, characterized in that the frits consist of the following glass-forming constituents:

40 to 60 % by weight $SiO_2$ + $ZrO_2$ with an $SiO_2$ to $ZrO_2$ molar ratio of > 10

10 to 20 % by weight alkali metal oxide with an $Na_2O$ to ($Li_2O$ + $K_2O$) molar ratio of > 0.8

8 to 18 % by weight $B_2O_3$

0 to 15 % by weight CaO + BaO + MgO + ZnO

0 to 8 % by weight $TiO_2$

0 to 4 % by weight $P_2O_5$

0 to 4 % by weight $Al_2O_3$

0.3 to 5 % by weight fluorine in form of fluorides

0.2 to 3.5 % by weight NiO or CoO

0 to 2 % by weight $Sb_2O_3$

0 to 2.5 % by weight CuO

1.5 to 5% by weight of adhesion-promoting constituents from the group consisting of CoO, NiO and CuO being present, and, additionally, MnO, $Fe_2O_3$ or other coloring constituents in quantities of up to 6% by weight and, in addition, 2.5 to 9% by weight $CeO_2$ which, through the separation of $CeO_2$ crystals during firing, leads to a distinct opacity of the enamel finish without any adverse effect on other desired properties of the enamel, such as resistance to acids and adhesion.

**2.** A frit as claimed in claim 1, characterized in that the content of fluorine in the form of fluorides is from 0.5 to 4% by weight.

**3.** A frit as claimed in claim 1, characterized in that the desired resistance to water and various mineral acids is obtained through a percentage $Li_2O$ content of 1.5 to 5.5% by weight and a total $Li_2O$ + $TiO_2$ content of 3 to 11% by weight, based on the composition of the frit.

**4.** A frit as claimed in claim 1, characterized in that the $CeO_2$ used as raw material has a purity of at least 92% and is not contaminated with natural minerals, such as bastnaesite, monazite, etc.

**5.** The use of the frit claimed in claims 1 to 4 for the direct enamelling of steel plate, characterized in that the opacity produced by the separation of $CeO_2$ during firing can be further increased by the use of opacifying mill additives, such as for example $ZrO_2$, $TiO_2$, $Sb_2O_3$, $CeO_2$.

**6.** The use of frits claimed in claims 1 to 4 for the production of light, acid-resistant firmly adhering coatings on unpickled or only mildly pickled cooking utensils, baking ovens, including accessories, architecture panels, heat exchanger plates and sanitary articles by the single-layer single-firing process.

**Claims for the following Contracting State : ES**

1. A process for the production of enamel frits for the direct enamelling of enamellable, preferably low-alloyed extruded steel, characterized in that the frits commercially available raw materials for enamels are melted at temperatures of 1100 to 1260°C, quenched and ground, the raw materials being used in such quantities that the frits consist of the following glass-forming constituents:

   40 to 60 % by weight $SiO_2$ + $ZrO_2$ with an $SiO_2$ to $ZrO_2$ molar ratio of > 10
   10 to 20 % by weight alkali metal oxide with an $Na_2O$ to ($Li_2O$ + $K_2O$) molar ratio of > 0.8
   8 to 18 % by weight $B_2O_3$
   0 to 15 % by weight $CaO$ + $BaO$ + $MgO$ + $ZnO$
   0 to 8 % by weight $TiO_2$
   0 to 4 % by weight $P_2O_5$
   0 to 4 % by weight $Al_2O_3$
   0.3 to 5 % by weight fluorine in form of fluorides
   0.2 to 3.5 % by weight $NiO$ or $CoO$
   0 to 2 % by weight $Sb_2O_3$
   0 to 2.5 % by weight $CuO$
   1.5 to 5% by weight of adhesion-promoting constituents from the group consisting of $CoO$, $NiO$ and $CuO$ being present, and, additionally, $MnO$, $Fe_2O_3$ or other coloring constituents in quantities of up to 6% by weight and, in addition, 2.5 to 9% by weight $CeO_2$ which, through the separation of $CeO_2$ crystals during firing, leads to a distinct opacity of the enamel finish without any adverse effect on other desired properties of the enamel, such as resistance to acids and adhesion.

2. A process as claimed in claim 1, characterized in that the content of fluorine in the form of fluorides is from 0.5 to 4% by weight.

3. A process as claimed in claim 1, characterized in that the desired resistance to water and various mineral acids is obtained through a percentage $Li_2O$ content of 1.5 to 5.5% by weight and a total $Li_2O$ + $TiO_2$ content of 3 to 11% by weight, based on the composition of the frit.

4. A process as claimed in claim 1, characterized in that the $CeO_2$ used as raw material has a purity of at least 92% and is not contaminated with natural minerals, such as bastnaesite, monazite, etc.

5. The use of the frit produced by the process claimed in claims 1 to 4 for the direct enamelling of steel plate, characterized in that the opacity produced by the separation of $CeO_2$ during firing can be further increased by the use of opacifying mill additives, such as for example $ZrO_2$, $TiO_2$, $Sb_2O_3$, $CeO_2$.

6. The use of frits produced by the process claimed in claims 1 to 4 for the production of light, acid-resistant firmly adhering coatings on unpickled or only mildly pickled cooking utensils, baking ovens, including accessories, architecture panels, heat exchanger plates and sanitary articles by the single-layer single-firing process.

**Revendications**
**Revendications pour les Etats contractants suivants : DE, FR, GB, IT, NL**

1. Fritte d'émail pour l'émaillage direct d'un acier pouvant être émaillé, de préférence d'un acier coulé en continu, faiblement allié, caractérisée en ce que la fritte est constituée des composants vitrifiables suivants :

   40-60 % en poids de $SiO_2$ + $ZrO_2$ avec un rapport molaire $SiO_2/ZrO_2$ supérieur à 10
   10-20 % en poids d'oxyde alcalin avec un rapport molaire $Na_2O/(Li_2O$ + $K_2O)$ supérieur à 0,8
   8-18% en poids de $B_2O_3$
   0-15% en poids de $CaO$ + $BaO$ + $MgO$ + $ZnO$
   0-8% en poids de $TiO_2$
   0-4 % en poids de $P_2O_5$
   0-4 % en poids de $Al_2O_3$
   0,3-5 % en poids de fluor sous forme de fluorures
   0,2-3,5 % en poids de $NiO$ ou de $CoO$
   0-2 % en poids de $Sb_2O_3$

0,2-2,5 % en poids de CuO,

1,5-5 % en poids de composants favorisant l'adhésion provenant du groupe CoO, NiO et CuO étant présents, contient aussi en outre MnO, $Fe_2O_3$ ou d'autres composants colorants dans des quantités allant jusqu'à 6 % en poids et par ailleurs 2,5-9 % en poids de $CeO_2$, lequel mène à une opacité nette de l'émaillage par dépôt de cristaux de $CeO_2$ lors de la cuisson sans perte des autres caractéristiques souhaitées de l'émail, comme par exemple la résistance à l'acide et l'adhérence de l'émail.

2. Fritte selon la revendication 1, caractérisée en ce que la teneur en fluor sous forme de fluorures est de 0,5-4 % en poids.

3. Fritte selon la revendication 1, caractérisée en ce que la résistance souhaitée à l'eau et à différents acides minéraux est obtenue en ce que la part en $LiO_2$ correspond à 1,5-5,5 % en poids et la part totale de $LiO_2$ + $TiO_2$ à 3-11 % en poids de la composition des frittes.

4. Fritte selon la revendication 1, caractérisée en ce que le $CeO_2$ utilisé en tant que matière première de fusion présente une pureté d'au moins 92% et n'est pas pollué avec des minéraux naturels comme la "bastnaésite", la "monazite, etc.

5. Utilisation de la fritte selon l'une quelconque des revendications 1 à 4 pour l'émaillage direct d'une tôle d'acier, caractérisée en ce qu'on peut encore plus accroître l'opacité suscitée par le dépôt de $CO_2$ pendant la cuisson en utilisant des additifs de broyage opacifiants, par exemple $ZrO_2$, $TiO_2$, $Sb_2O_3$, $CeO_2$.

6. Utilisation de la fritte selon l'une quelconque des revendications 1 à 4 pour la préparation de revêtements clairs, résistants à l'acide, ayant une bonne adhérence sur des batteries de cuisine, des fours avec accessoires, des panneaux de lambris pour l'architecture, des tôles d'échangeur de chaleur et des articles sanitaires non décapés ou seulement faiblement décapés dans le procédé d'une cuisson pour une couche.

**Revendications pour l'Etat contractant suivant : ES**

1. Procédé pour la préparation de frittes d'émail pour l'émaillage direct d'un acier pouvant être émaillé, de préférence d'un acier coulé en continu faiblement allié, caractérisé en ce qu'on fait fondre les frittes constituées de matières premières d'émail classiques dans le commerce à des températures de 1100-1260°C, qu'on les trempe ensuite et qu'on les broie, les matières premières étant utilisées dans de telles quantités que les frittes sont constituées des composants vitrifiables suivants :

40-60 % en poids de $SiO_2$ + $ZrO_2$ avec un rapport molaire $SiO_2/ZrO_2$ supérieur à 10

10-20 % en poids d'oxyde alcalin avec un rapport molaire $Na_2O/(Li_2O$ + $K_2O)$ supérieur à 0,8

8-18% en poids de $B_2O_3$

0-15% en poids de CaO + BaO + MgO + ZnO

0-8% en poids de $TiO_2$

0-4% en poids de $P_2O_5$

0-4% en poids de $Al_2O_3$

0,3-5 % en poids de fluor sous forme de fluorures

0,2-3,5 % en poids de NiO ou de CoO

0-2% en poids de $Sb_2O_3$

0,2-2,5 % en poids de CuO,

1,5-5 % en poids de composants favorisant l'adhérence provenant du groupe CoO, NiO et CuO étant présents, contiennent aussi en outre MnO, $Fe_2O_3$ ou d'autres composants colorants dans des quantités allant jusqu'à 6 % en poids et par ailleurs 2,5-9 % en poids de $CeO_2$, lequel mène à une opacité nette de l'émaillage par dépôt des cristaux de $CeO_2$ lors de la cuisson sans perte des autres caractéristiques souhaitées de l'émail, comme par exemple la résistance à l'acide et l'adhérence de l'émail.

2. Procédé selon la revendication 1, caractérisé en ce que la teneur en fluor sous forme de fluorures est de 0,5-4 % en poids.

3. Procédé selon la revendication 1, caractérisé en ce que la résistance souhaitée à l'eau et à différents acides minéraux est obtenue en ce que la part en $Li_2O$ correspond à 1,5-5,5 % en poids et que la part totale de $Li_2O$ + $TiO_2$ à 3-11 % en poids de la composition des frittes.

4. Procédé selon la revendication 1, caractérisé en ce que le $CeO_2$ utilisé en tant que matière première de fusion présente une pureté d'au moins 92% et n'est pas pollué avec des minéraux naturels comme la bastnaésite, la monazite, etc.

5. Utilisation des frittes préparées selon l'une quelconque des revendications 1 à 4 pour l'émaillage direct d'une tôle d'acier, caractérisée en ce qu'on peut encore plus accroître l'opacité suscitée par l'intermédiaire du dépôt de $CO_2$ pendant la cuisson, en utilisant des additifs de broyage opacifiants, par exemple $ZrO_2$, $TiO_2$, $Sb_2O_3$, $CeO_2$.

6. Utilisation des frittes selon l'une quelconque des revendications 1 à 4 pour la préparation de revêtements clairs, résistants à l'acide, ayant une bonne adhérence sur des batteries de cuisine, des fours et leurs accessoires, des panneaux de lambris pour l'architecture, des tôles d'échangeur de chaleur et des articles sanitaires non décapés ou seulement faiblement décapés dans le procédé d'une cuisson pour une couche.

FIG.1